# EUROPEAN PATENT APPLICATION

(11) **EP 4 411 558 A1**
(43) Date of publication of application: **07.08.2024**
(21) Application number: 24154783.5
(22) Date of filing: 30.01.2024
(51) Int. Cl.: G06F 16/2455, G06F 9/46, G06F 9/54, G06F 16/25, G06F 16/27

(54) **STREAMING EVENT DATA TO DIFFERENT CONSUMER INSTANCES OF ONE EVENT CONSUMER DURING FAILURE OF A CONSUMER INSTANCE'S ABILITY TO PROCESS THE EVENT DATA**

(30) Priority: 31.01.2023 US 202363442425 P; 16.05.2023 US 202318198241
(71) Applicant: VMware LLC, Palo Alto, CA 94304 (US)
(72) Inventor: Pankov, Miroslav Aleksandrov, 1766 Sofia (BG); Rankov, Alex, Palo Alto, 94304 (US)
(74) Representative: Dilg, Haeusler, Schindelmann Patentanwaltsgesellschaft mbH

(57) **Abstract**

Some embodiments provide a novel method for providing data regarding events that is stored in a data store to a set of consumers. An event server provides, to a first instance of a particular consumer that includes several instances, a stream of data regarding a first event that is stored in a set of one or more partitions of the data store assigned to the first instance. The event server receives, from the first instance, notification that the first instance failed to process the stream of data. The event server unassigns the set of partitions to the first instance. The event server assigns the set of partitions to a second instance of the particular consumer. The event server provides, to the second instance, the stream of data regarding the first event.

## Description

### BACKGROUND

In a microservice architecture, there are often multiple services (referred to as consumers) interested in the data provided by authoritative services (referred to as publishers) and the events related to the data (e.g., data changes, network component updates, etc.). In a traditional model, a single publisher publishes data for multiple consumers per event feed. While there are many requirements for this model, such as ordering, filtering, delivery target requirements, and others, one problem in particular relates to the portability of publishers and consumers in different environments and topologies.

Traditionally, a consumer sends a request for event data specifying the event category, partition, and offset of the data store from which the consumer is requesting data. However, if the configuration of the data store changes, the consumer needs to be notified, and it is difficult for a consumer to map all of the already processed partitions and offsets to the new data store's configuration. Hence, methods and systems are needed for providing event data to consumers that have little to no knowledge about the configuration of the data store.

### BRIEF SUMMARY

Some embodiments provide a novel method for providing data regarding events that is stored in a data store. An event server receives a registration to receive data for a first event from a particular consumer. The event server uses an identity associated with the particular consumer to identify a set of one or more partitions of the data store that store data for the first event. The event server provides, to the particular consumer, a stream of data regarding the first event that is stored in the identified partition set for the particular consumer to process.

In some embodiments, the event server receives in the registration a first event identifier that specifically identifies the first event. In other embodiments, the event server receives a first event type identifier that identifies the first event. This event type identifier identifies a category of events that includes the first event. In some embodiments, the identified category of events further includes at least a second event.

The event server of some embodiments also receives an identifier that identifies the particular consumer. In some embodiments, the particular consumer includes several consumer instances, and the event server receives an identifier that identifies a first instance of the particular consumer as the instance that is registering for the data for the first event. The event server of some embodiments uses the identifier that identifies the first instance of the particular consumer to identify the partition set. This can be accomplished by performing a lookup in a cache to determine that the partition set is assigned to the first instance.

In some embodiments, the event server also (1) receives from a second instance of the particular consumer a registration to receive data associated with the first event type identifier, (2) uses an identifier that identifies the second instance to identify another partition set of the data store that stores other data for the first event, and (3) provides, to the second instance, another stream of data from the other identified partition set that stores other data regarding the first event. In such embodiments, different instances of the same consumer may not be allowed to receive data from the same partitions, so each instance is assigned their own partition set.

In some embodiments, the event server provides, to the particular consumer, the stream of data regarding the first event by iteratively providing data tuples that are stored continuously in the identified partition set regarding the first event.

The data storage of some embodiments is a distributed data storage. This distributed data storage can be a distributed database, which can include multiple database instances located in different geographic sites (e.g., different buildings, cities, regions, states, countries, etc.). In some embodiments, at least two partitions of the data store are in two different geographic sites.

The particular consumer of some embodiments resides in a first datacenter and the data store resides in a second datacenter. These first and second datacenters may belong to a same cloud provider, or may belong to different cloud providers.

Some embodiments provide a novel method for providing data regarding events that is stored in a data store to a set of consumers. An event server provides, to a first instance of a particular consumer that includes several instances, a stream of data regarding a first event that is stored in a set of one or more partitions of the data store assigned to the first instance. The event server receives, from the first instance, notification that the first instance failed to process the stream of data. The event server unassigns the set of partitions to the first instance. The event server assigns the set of partitions to a second instance of the particular consumer. The event server provides, to the second instance, the stream of data regarding the first event.

In some embodiments, the set of consumers have no knowledge of how the event server stores the data in the data store. Because of this, the event server keeps track of which data each consumer has already received and which data each consumer has yet to receive. Before providing the stream of data regarding the first event to the first instance, the event server in some embodiments (1) receives, from the first instance, a registration to receive data for the first event, (2) uses an identifier of the first instance to identify the set of partitions of the data store assigned to the first instance, and (3) retrieves the stream of data from the set of partitions.

In such embodiments, the event server maintains a cache that includes mappings between each of the instances of the particular consumer and different sets of one or more partitions of the data store. These mappings allow the event server to keep track of the data each consumer has received and has yet to receive. The event server in some embodiments unassigns the set of partitions to the first instance by updating a first entry stored in the cache mapping the first instance to the set of partitions into a second entry that does not map the first instance to any partitions in the data store. This second entry indicates to the event server that the first instance does not need to receive any more data from the set of partitions.

In some embodiments, the stream of data is a first stream of data and the set of partitions is a first set of partitions. In such embodiments, assigning the set of partitions to the second instance includes, after unassigning the first set of partitions to the first instance, (1) receiving, from the second instance, notification that the second instance has processed a second stream of data regarding the first event that is stored in a second set of one or more partitions of the data store, and (2) updating a third entry stored in the cache mapping the second instance to the second set of partitions into a fourth entry mapping the second instance to the first set of partitions.

The event server in some embodiments receives, from the second instance, notification that the second instance failed to process the stream of data. In some embodiments, this is due to a failure of the second instance. After receiving notification that the second instance failed to process the stream of data, the event server in some embodiments resends the stream of data to the second instance for the second instance to reprocess it. In some embodiments, before resending the stream of data, the event server unassigns the set of partitions to the second instance, receives, from the second instance, a registration to receive data for the first event, and reassigns the set of partitions to the second instance. This allows the event server to maintain the cache and ensure that the second instance successfully processes all data it receives.

In some embodiments, after unassigning the first set of partitions to the first instance, the event server receives, from the first instance, a registration to receive data for the first event, assigns another set of partitions to the first instance that stores data regarding the first event, and provides another stream of data regarding the first event to the first instance. After the first instance receives and processes all data regarding the first event that is stored in the first set of partitions, the event server assigns the other set of partitions to continue sending data regarding the first event to the first instance.

Streams of data are provided to instances in some embodiments by iteratively providing data tuples that are stored continuously in the partitions regarding the events. For instance, the second instance iteratively receives data tuples stored continuously in the set of partitions regarding the first event. In such embodiments, because publishers of the data continuously publish data to the event server to store in the partitions, the event server continuously provides the data to the consumers registered to receive it.

In some embodiments, the data storage is a distributed data storage. In some of these embodiments, the distributed data storage is a distributed database. At least two partitions of the data store are stored in two different geographic sites in some embodiments. In other embodiments, all partitions are stored in a same geographic site.

The particular consumer in some embodiments resides in a first datacenter and the data store resides in a second datacenter. In such embodiments, the event server resides in the second datacenter along with the data store. These first and second datacenters in some embodiments belong to a same cloud provider. In other embodiments, the first and second datacenters belong to different cloud providers. In some embodiments, the first instance of the particular consumer resides in a first datacenter, while the second instance resides in a second datacenter. The data store in some embodiments resides in one of these datacenters along with one of the instances, and resides in a third datacenter in other embodiments.

Some embodiments provide a novel policy-driven method for providing event data to several event consumers. An event server stores in a set of one or more data storages event data published by a set of one or more event data publishers. The event server receives first and second different event-distribution policies from first and second event consumers for first and second streams of event data tuples for which the first and second event consumers register with the event server to receive. Each event consumer has multiple consumer instances. The event server uses the first and second event-distribution policies to differently distribute the first and second streams of event data tuples to the consumer instances of the first and second event consumers.

The first and second event-distribution policies are two of the following three policies: (1) a replication policy that specifies that each consumer instance of each particular event consumer receives each event data tuple for which the particular event consumer registers for notification, (2) a non-overlap policy that specifies that no two consumer instances of the particular event consumer receives a same event data tuple for which the particular event consumer registers for notification, and (3) an overlap policy that allows two consumer instances of the particular event consumer to receive two different subsets of event data tuples that have overlapping event data tuples in common.

In some embodiments, the event server also receives, from the first and second event consumers, first and second registrations to receive data for first and second sets of events. These registrations notify the event server that it is to send the streams of event data tuples to the first and second event consumers for which they registered. The event consumers in some embodiments have no knowledge of how the event server stores the event data in the set of data storages. In such embodiments, the event consumers do not provide specific locations in the set of data storages that store the event data when registering with the event server. For instance, each event consumer provides an identifier of the event for which they are registering and a set of one or more identifiers associated with the event consumer or with the consumer instances of the event consumer. Using these identifiers and the received event-distribution policies, the event server knows which data to provide to the event consumer.

The event server in some embodiments receives, from a third event consumer , a third event-distribution policy for a third stream of event data tuples for which the third consumer registers with the event server to receive, and uses the third event-distribution policy to distribute the third stream of event data tuples to the plurality of consumer instances of the third event consumer. In some embodiments, this third event-distribution policy is a primary instance policy that specifies that a particular consumer instance of the third event consumer receives the third stream of event data tuples such that no other consumer instances of the third event consumer receive any event data tuples. This particular instance is in some embodiments designated as a primary instance of the third event consumer.

In some embodiments, the set of data storages is a distributed data storage. In some of these embodiments, the distributed data storage is a distributed database. In some embodiments, at least two data storages of the set of data storages are in two different geographic sites. In other embodiments, all data storages are in a single geographic site.

In some embodiments, the set of data storages resides in a first datacenter while the first and second event consumers reside in a second datacenter. In other embodiments, the set of data storages resides in a first datacenter, the first event consumer resides in a second datacenter, and the second event consumer resides in a third datacenter. The event consumers are able to reside in different datacenters than the data storages because the event server provides the consumers with event data without the event consumers having knowledge of how the event server stores the data in the data storages.

The preceding Summary is intended to serve as a brief introduction to some embodiments of the invention. It is not meant to be an introduction or overview of all inventive subject matter disclosed in this document. The Detailed Description that follows and the Drawings that are referred to in the Detailed Description will further describe the embodiments described in the Summary as well as other embodiments. Accordingly, to understand all the embodiments described by this document, a full review of the Summary, Detailed Description, the Drawings, and the Claims is needed. Moreover, the claimed subject matters are not to be limited by the illustrative details in the Summary, Detailed Description, and Drawings.

### BRIEF DESCRIPTION OF THE DRAWINGS

The novel features of the invention are set forth in the appended claims. However, for purposes of explanation, several embodiments of the invention are set forth in the following figures.
**Figure 1** illustrates an example system for an event server to facilitate event registration between a distributed data storage and a set of consumers.
**Figure 2** illustrates an example architecture in which a data storage and event server reside in a first datacenter and a publisher and a set of consumers reside in a second datacenter.
**Figure 3** illustrates an example architecture in which a data storage, event server, and publisher reside in a first datacenter and a set of consumers reside in a second datacenter.
**Figure 4** illustrates an example architecture in which a data storage, event server, publisher, and consumer reside in a first datacenter and other consumers reside in a second datacenter.
**Figure 5** illustrates an example architecture in which a data storage and event server reside in a first datacenter, a set of two consumers reside in a second datacenter, a publisher resides in a third datacenter, and a third consumer resides in a fourth datacenter.
**Figure 6** illustrates an example architecture in which a data storage and event server reside in a first datacenter and a publisher and three consumers each operate in their own datacenter.
**Figure 7** illustrates an example event server for facilitating event registration for a set of consumers.
**Figure 8** conceptually illustrates a process of some embodiments for registering for events with a distributed database that includes several data stores in several locations.
**Figure 9** illustrates an example cache that an event server utilizes to provide event data to a set of consumers.
**Figure 10** illustrates an example Kafka data storage offered by Apache Kafka@ that can be used for storing and retrieving event data for consumers.
**Figure 11** illustrates communication between an event consumer, event server, lock, cache, and streaming engine in order to provide event data to the event consumer.
**Figure 12** illustrates communication between an event consumer, event server, lock, cache, and streaming engine in order to record that the event consumer has successfully processed event data it received from the event server.
**Figure 13** illustrates communication between an event consumer, event server, lock, and cache when the event consumer takes a long time to process received event data.
**Figure 14** illustrates communication between an event consumer, event server, lock, and cache when the event consumer fails to process a received set of event data.
**Figure 15** illustrates an example system for an event server to facilitate event registration between a distributed data storage and a set of consumers that require different policies for receiving event data.
**Figure 16** conceptually illustrates an electronic system with which some embodiments of the invention are implemented.

### DETAILED DESCRIPTION

In the following detailed description of the invention, numerous details, examples, and embodiments of the invention are set forth and described. However, it will be clear and apparent to one skilled in the art that the invention is not limited to the embodiments set forth and that the invention may be practiced without some of the specific details and examples discussed.

Some embodiments provide a novel method for registering for events with a distributed database that includes several data stores in several locations. An event server that facilitates event registration between the distributed database and a set of consumers receives an identifier identifying a particular consumer of events. The event server uses the received identifier to identify a set of one or more partitions in the several data stores that the particular consumer is allowed to access. The event server provides to the particular consumer a particular set of event data from the set of partitions for the particular consumer to process the particular set of event data.

The data storage of some embodiments is a distributed data storage. This distributed data storage can be a distributed database, which can include multiple database instances located in different geographic sites (e.g., different buildings, cities, regions, states, countries, etc.). In some embodiments, at least two partitions of the data store are in two different geographic sites.

The particular consumer of some embodiments resides in a first datacenter and the data store resides in a second datacenter. These first and second datacenters may belong to a same cloud provider, or may belong to different cloud providers.

Some embodiments provide a novel method for providing data regarding events that is stored in a data store to a set of consumers. An event server provides, to a first instance of a particular consumer that includes several instances, a stream of data regarding a first event that is stored in a set of one or more partitions of the data store assigned to the first instance. The event server receives, from the first instance, notification that the first instance failed to process the stream of data. The event server unassigns the set of partitions to the first instance. The event server assigns the set of partitions to a second instance of the particular consumer. The event server provides, to the second instance, the stream of data regarding the first event.

In some embodiments, the set of consumers have no knowledge of how the event server stores the data in the data store. Because of this, the event server keeps track of which data each consumer has already received and which data each consumer has yet to receive. Before providing the stream of data regarding the first event to the first instance, the event server in some embodiments (1) receives, from the first instance, a registration to receive data for the first event, (2) uses an identifier of the first instance to identify the set of partitions of the data store assigned to the first instance, and (3) retrieves the stream of data from the set of partitions.

In such embodiments, the event server maintains a cache that includes mappings between each of the instances of the particular consumer and different sets of one or more partitions of the data store. These mappings allow the event server to keep track of the data each consumer has received and has yet to receive. The event server in some embodiments unassigns the set of partitions to the first instance by updating a first entry stored in the cache mapping the first instance to the set of partitions into a second entry that does not map the first instance to any partitions in the data store. This second entry indicates to the event server that the first instance does not need to receive any more data from the set of partitions.

Some embodiments provide a novel policy-driven method for providing event data to several event consumers. An event server stores in a set of one or more data storages event data published by a set of one or more event data publishers. The event server receives first and second different event-distribution policies from first and second event consumers for first and second streams of event data tuples for which the first and second event consumers register with the event server to receive. Each event consumer has multiple consumer instances. The event server uses the first and second event-distribution policies to differently distribute the first and second streams of event data tuples to the consumer instances of the first and second event consumers.

The first and second event-distribution policies are two of the following three policies: (1) a replication policy that specifies that each consumer instance of each particular event consumer receives each event data tuple for which the particular event consumer registers for notification, (2) a non-overlap policy that specifies that no two consumer instances of the particular event consumer receives a same event data tuple for which the particular event consumer registers for notification, and (3) an overlap policy that allows two consumer instances of the particular event consumer to receive two different subsets of event data tuples that have overlapping event data tuples in common.

In some embodiments, the event server also receives, from the first and second event consumers, first and second registrations to receive data for first and second sets of events. These registrations notify the event server that it is to send the streams of event data tuples to the first and second event consumers for which they registered. The event consumers in some embodiments have no knowledge of how the event server stores the event data in the set of data storages. In such embodiments, the event consumers do not provide specific locations in the set of data storages that store the event data when registering with the event server. For instance, each event consumer provides an identifier of the event for which they are registering and a set of one or more identifiers associated with the event consumer or with the consumer instances of the event consumer. Using these identifiers and the received event-distribution policies, the event server knows which data to provide to the event consumer.

The event server in some embodiments receives, from a third event consumer , a third event-distribution policy for a third stream of event data tuples for which the third consumer registers with the event server to receive, and uses the third event-distribution policy to distribute the third stream of event data tuples to the plurality of consumer instances of the third event consumer. In some embodiments, this third event-distribution policy is a primary instance policy that specifies that a particular consumer instance of the third event consumer receives the third stream of event data tuples such that no other consumer instances of the third event consumer receive any event data tuples. This particular instance is in some embodiments designated as a primary instance of the third event consumer.

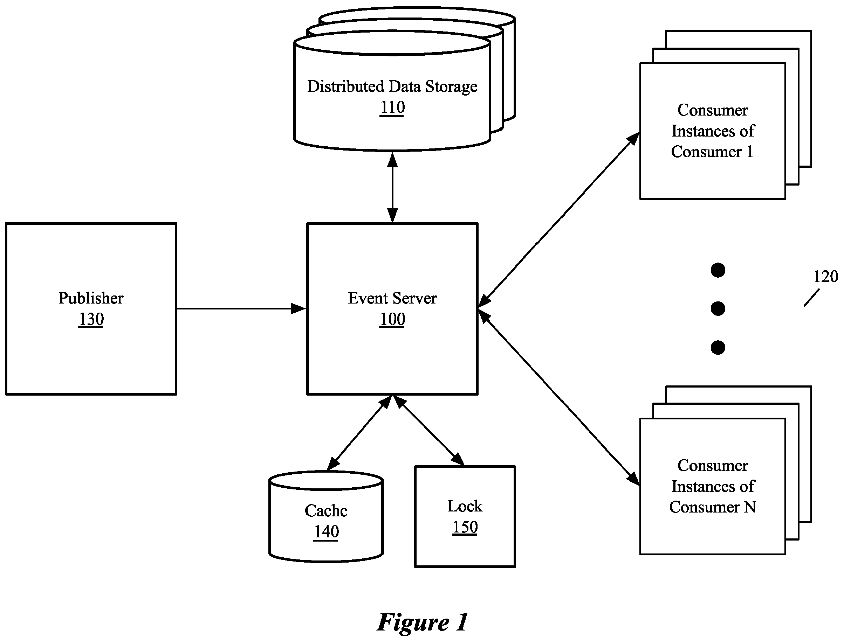

In some embodiments, because a consumer has no visibility into how a distributed database is structured and stores event data, an event server uses information about the consumer in order to identify what event data to provide to the consumer. The event server keeps track of which data the consumer is allowed to receive and which data stored in the distributed database the consumer has already consumed (i.e., received and processed). **Figure 1** illustrates an example system for an event server 100 to facilitate event registration between a distributed data storage 110 and a set of consumers 120. The event server 100 enables the set of consumers 120 to be able to process event data stored in the distributed data store 110 without having to know anything about how data is stored and organized within the distributed database 110.

The distributed data store 110 of some embodiments is a distributed database that includes multiple data stores residing in multiple locations. The distributed data store 110 can be defined on one or more physical disks or one or more physical devices, and can include any number of instances. In some embodiments, each instance stores the same data. In such embodiments, the data store 110 can be configured in a high availability (HA) configuration such that one instance is designated as a primary instance and the other instances are designated as secondary instances. In other embodiments, each instance of the data store 110 stores different data such that no data is stored in more than one instance. Still, in other embodiments, at least two instances of the data store 110 can store some of the same data and some different data.

The set of consumers 120 can include any number of consumers that use the event server 100 to receive data from the distributed data storage 110. A consumer in some embodiments is a software application, program, or module operating (1) on a virtual machine (VM), (2) on a container, (3) on a pod, or (4) as a standalone program on a host computer. In some embodiments, one or more consumers are implemented by multiple consumer instances. In such embodiments, each consumer can be configurated in an HA configuration such that one instance is designated as the primary instance and all other instances are designated as secondary instances. The primary instance in some embodiments is the only instance that receives and processes event data from the event server 100 in order to avoid redundant processing of data by the consumer. In some embodiments, the primary instance processes event data and provides the results to each secondary instance.

In other embodiments, regardless of whether the instances are configurated in an HA configuration or not, each instance receives event data from the event server 100 to process. In these embodiments, each instance can receive different data from the event server 100 in order to keep multiple instances from processing the same data. Alternatively, each instance can receive the same data in order for each instance to have the results of all processed event data. For example, for a distributed load balancing service, each instance may wish to process all event data so that each instance properly performs the load balancing services offered by the distributed load balancing service.

In some embodiments, the data stored in the distributed data storage 110 is provided by a publisher 130. A publisher in some embodiments is a software program, application, or module (e.g., an authoritative service) operating on a host computer that provides data regarding network components for other software programs (i.e., consumers). For example, the publisher 130 can store data regarding updates to a host computer (e.g., the host computer getting a new central processing unit (CPU) or memory configuration). In other embodiments, a publisher is an application that provides data regarding events that is to be processed by a set of consumer applications.

Examples of publisher applications include banking applications, stock exchange applications, web browsers, streaming services, rideshare applications, food delivery applications, etc. For example, for a streaming service application, the publisher in some embodiments publishes event data related to (1) customer logins of the streaming service, (2) new signups for the streaming service, (3) consumption of content, (4) creation of content, and (5) interaction with the streaming service. Once published, one or more consumers process this event data. The processed data can be analyzed in order to improve the streaming service or to improve the customer experience of the streaming service.

In some embodiments, like the consumers 120, the publisher 130 does not have visibility into how data is stored in the distributed data storage 110. In such embodiments, the publisher 130 provides all event data to the event server 100, which stores it in the distributed data storage 110. In other embodiments, the publisher 130 does have visibility into the organization or structure of the distributed data storage 110, and stores event data directly into the distributed data store 110. While the embodiments described throughout refer to one publisher, one of ordinary skill would understand that any described embodiments can include multiple publishers that provide event data to be stored in a data storage.

In order to properly provide event data to each consumer 120, the event server 100 utilizes a cache 140 and a lock 150. The cache 140 stores records specifying which data each consumer in the set of consumers 120 has already successfully received and processed. The cache can store, for each consumer or consumer instance, a mapping between an identifier of the consumer or consumer instance and a state indicating which sets of event data have already been processed and which sets of event data have not. The cache may also maintain mappings between event type identifiers identifying the type of event data consumers can request and one or more event category identifiers (i.e., a tag, or a topic) related to the distributed data storage 110. These mappings may also be stored by the event server 100, such as in a memory or local storage. The event server 100 can look up information and use it to provide the right event data to each consumer 120.

For example, for a health monitoring system consumer that needs event data regarding a particular host computer, a consumer instance of the consumer can provide an event type identifier (inventory.core.Host), a consumer identifier (HealthMonitoringSystem), and a consumer instance identifier (866aa2el-2c5d-470b-8bdd-4436f6a97832). In this example, the consumer instance identifier is a uniquely universal identifier (UUID), however, in other embodiments, another type of identifier may be used. Using this information, the event type identifier's corresponding event category identifier (events-inventory.core.Host) can be identified. In this example, the event type identifier maps to a single event category identifier. However, if the event type identifier were to map to multiple event category identifiers, the mapping can return event category identifiers such as events-inventory.core.Host-1, events-inventory.core.Host-2, events-inventory.core.Host-3, etc. If the event type identifier were to map to a single event category identifier along with other event type identifiers, the event category identifier may be events-inventory.core.

The lock 150 is used by the event server 100 to put locks on various identifiers and consumers. For instance, one consumer instance cannot send parallel requests for event data from the event server 100. If the event server 100 were to process concurrent event data requests from one consumer instance, the event server 100 may provide duplicates of event data to one consumer instance. In order to obviate this, the event server 100 uses the lock 150 to lock an identifier of the consumer instance that sent a request for data so that the same consumer instance cannot send another request until after the current request is complete.

In some embodiments, an event server (such as the event server 100 of **Figure 1**) provides data regarding events that is stored in a data store. This event server is a streaming service that streams data regarding events to consumers. The consumers register with the streaming service to receive the streamed data, and the event server provides data streams regarding events for which a consumer has registered for the consumer to process the events.

For example, a consumer service may wish to synchronize its state with an authoritative service (i.e., the publisher). In some embodiments, this is used to store event data in a cache or history to avoid intensive traffic to the authoritative service. For a monitoring service alert pipeline, which receives thousands of alerts per second, the service needs to retrieve data from various sources for each alert, such as from a core inventory source. In order to avoid requesting core inventory data for each alert (which would result in receiving the same or similar event data each time), the monitoring service alert pipeline maintains a cache of core inventory data. By registering with the event server for changes to core inventory data, the monitoring service alert pipeline synchronizes (e.g., replicates) the core inventory database to its own cache.

As another example, for a consumer that needs historical data regarding resources (i.e., network elements) and event data regarding each state transition or change of each resource, the consumer can register for event notifications from the event server to receive event data each time a resource changes.

The event server (1) receives a registration to receive data for a first event from a particular consumer, (2) uses an identity associated with the particular consumer to identify a set of one or more partitions of the data store that store data for the first event, and (3) provides, to the particular consumer, a stream of data regarding the first event that is stored in the identified partition set for the particular consumer to process.

In some embodiments, the event server receives in the registration a first event identifier that specifically identifies the first event. In other embodiments, the event server receives a first event type identifier that identifies the first event. This event type identifier identifies a category of events that includes the first event. In some embodiments, the identified category of events further includes at least a second event. Categories of events in some embodiments are identified by category identifiers. In some embodiments, events stored in a Kafka database offered by Apache Kafka@ are stored according to Kafka topics.

The event server of some embodiments also receives an identifier that identifies the particular consumer. In some embodiments, the particular consumer includes several consumer instances, and the event server receives an identifier that identifies a first instance of the particular consumer as the instance that is registering for the data for the first event. The event server of some embodiments uses the identifier that identifies the first instance of the particular consumer to identify the partition set. This can be accomplished by performing a lookup in a cache to determine that the partition set is assigned to the first instance.

In some embodiments, the event server also (1) receives from a second instance of the particular consumer a registration to receive data associated with the first event type identifier, (2) uses an identifier that identifies the second instance to identify another partition set of the data store that stores other data for the first event, and (3) provides, to the second instance, another stream of data from the other identified partition set that stores other data regarding the first event. In such embodiments, different instances of the same consumer may not be allowed to receive data from the same partitions, so each instance is assigned their own partition set.

In some embodiments, the event server provides, to the particular consumer, the stream of data regarding the first event by iteratively providing data tuples that are stored continuously in the identified partition set regarding the first event. The event server of some embodiments specifies in the data tuples, along with the event data, an identifier of the source of the event data (i.e., the publisher that provided the data), the event type identifier, the event category identifier, the consumer identifier, and the consumer instance identifier.

The data storage of some embodiments is a distributed data storage. This distributed data storage can be a distributed database, which can include multiple database instances located in different geographic sites (e.g., different buildings, cities, regions, states, countries, etc.). In some embodiments, at least two partitions of the data store are in two different geographic sites.

The particular consumer of some embodiments resides in a first datacenter and the data store resides in a second datacenter. These first and second datacenters may belong to a same cloud provider, or may belong to different cloud providers.

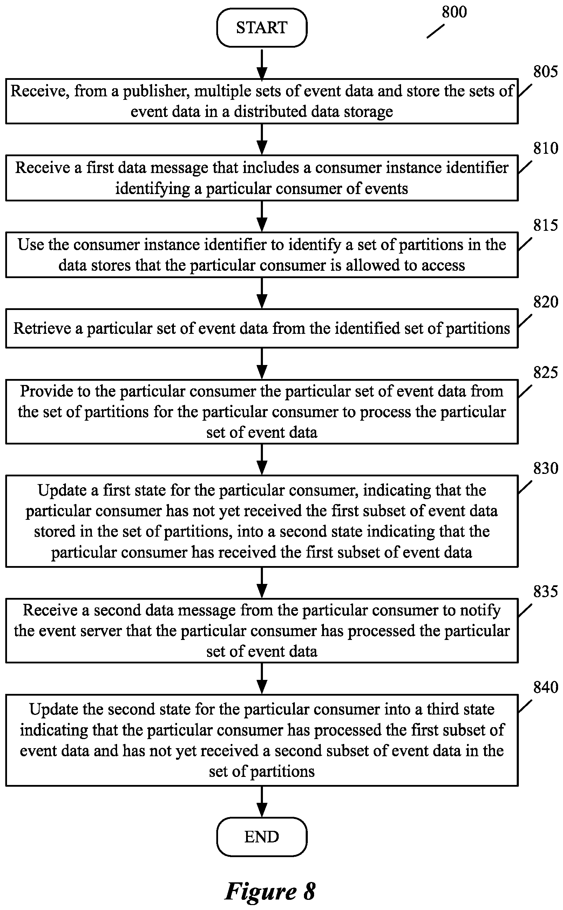

In some embodiments described below (e.g., the process 800 of **Figure 8**)**,** a particular consumer instance provides an event type identifier that identifies a category (e.g., a topic) of events for which the particular instance should receive data. From this event type identifier, the event server identifies partitions in the data store that store event data relating to one or more events that are associated with the event category (e.g., topic) identified by the provided event type identifier. One of ordinary skill will realize that other embodiments provide other mechanisms for the consumer instance to specify the event or group of events for which the instance should receive data. For instance, in other embodiments, the instance's registration includes a specific event identifier that identifies a specific event for which the instance should receive data. Alternatively, or conjunctively, other embodiments allow the consumer instance's registration to include a specific group event identifier that specifically identifies one or more events for which the instance should receive data.

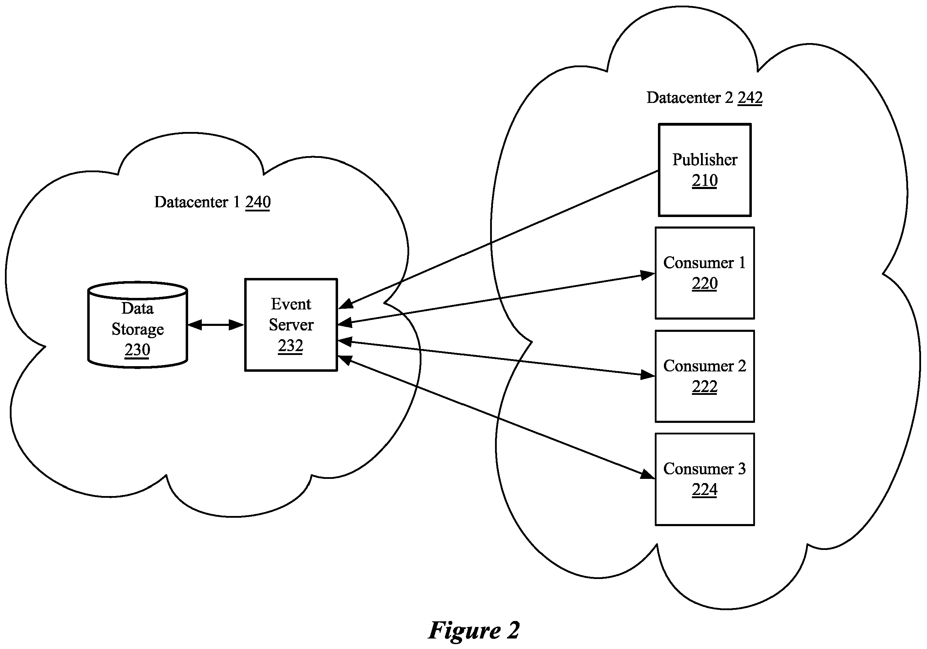

Because consumers (and sometimes publishers) do not know how data is stored in a data storage, the consumers (and sometimes the publishers) can reside in a different network or datacenter than the data storage. **Figures 2-6** illustrate different example architectures in which a publisher and consumers can reside. In **Figure 2****,** a the data storage 230 and event server 232 reside in a first datacenter 240. A publisher 210 and the three consumers 220, 222, and 224 all reside in a datacenter 242. Across the datacenters 240 and 242, the publisher 210 provides event data to the event server 232, and the consumers 220-224 send event data requests to and receive event data from the event server 232.

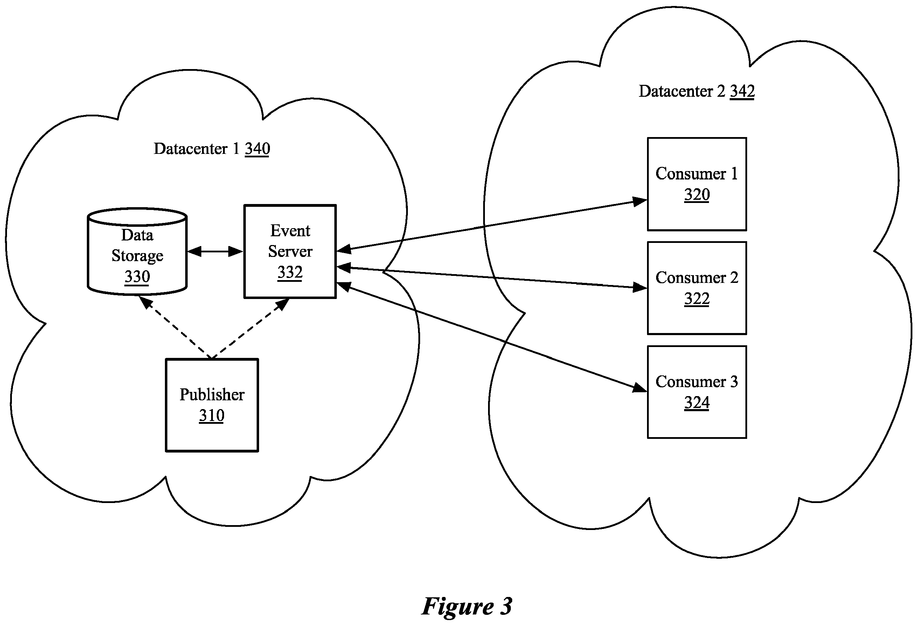

**Figure 3** illustrates another example architecture for a publisher 310 and consumers 320-324. However, in this example, the publisher 310 resides in the same datacenter 340 as the data storage 330 and the event server 332. Because of this, the publisher 310 can send event data directly to the data storage 330, or provide it to the event server 332. The consumers 320-324 reside in a second datacenter 342 and exchange data messages with the event server 332.

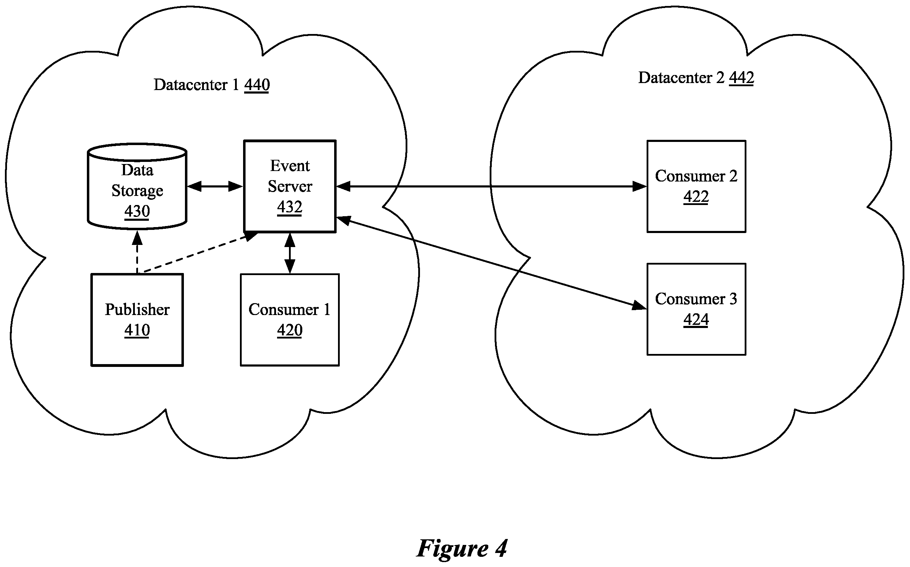

**Figure 4** illustrates another example architecture where one consumer 420 resides in a first datacenter 440 along with the publisher 410, data storage 430, and event server 432, while the other consumers 422 and 424 reside in a second datacenter 442. Even though the first consumer 420 resides in the same datacenter 440 as the data storage 430, the consumer 420 still interacts with the event server 432 because the consumer 420 does not know how the data storage 430 stores event data. While this figure illustrates the publisher 410 residing in the first datacenter 440, the publisher 410 can also reside in the second datacenter 442 or in another datacenter.

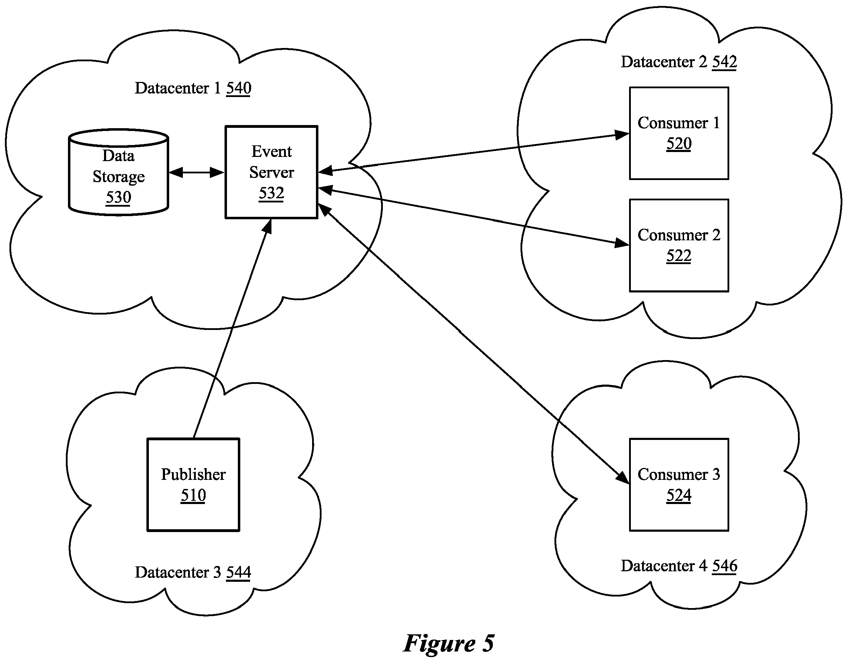

**Figure 5** illustrates another example architecture. In this example, the data storage 530 and event server 532 reside in a first datacenter 540. Consumers 520 and 522 reside in a second datacenter 542. The publisher 510 resides in a third datacenter 544, and a third consumer 524 resides in a fourth datacenter 546. Here, the publisher 510 and the consumers 520-524 interact with the event server 532 across the datacenters.

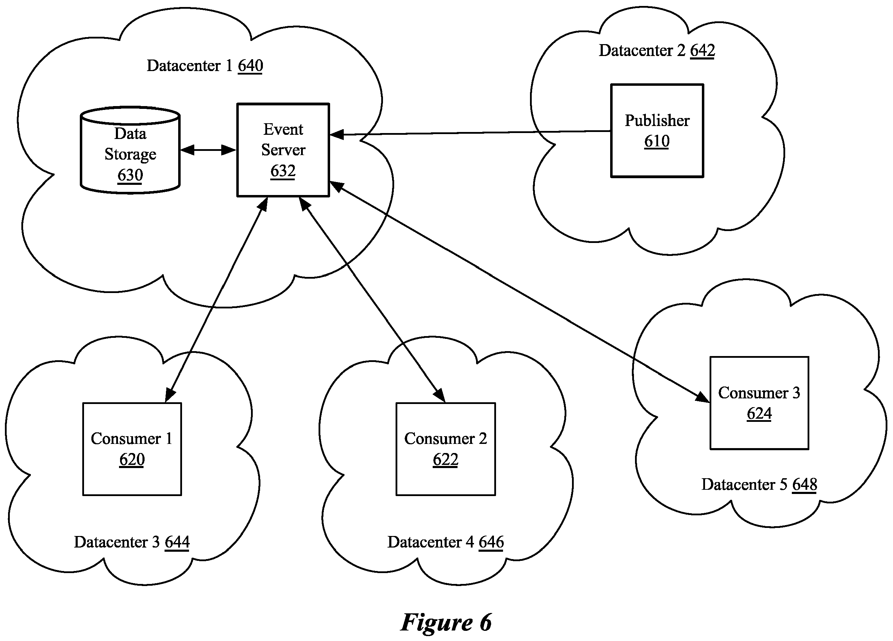

**Figure 6** illustrates yet another example architecture. In this example, the publisher 610 and consumers 620-624 each reside in their own datacenter. The data storage 630 and event server 632 reside in a first datacenter 640, the publisher 610 resides in a second datacenter 642, and the consumers 620-624 each reside in a third datacenter 644, a fourth datacenter 646, and a fifth datacenter 648, respectively. While the publisher 610 is shown to be in a separate datacenter 642 than the data storage 630 and the event server 632, the publisher 610 may instead reside in the first datacenter 640 with each consumer 620-624 still in their own datacenter 644-648. While each of the **Figures 2-6** illustrate one publisher, anyone of ordinary skill in the art would understand that any of the illustrated architectures can include multiple publishers, operating in the same datacenter or in different datacenters.

In some embodiments the datacenters in which data storages, publishers, and consumers reside are in different regions of private or public clouds. These datacenters can belong to the same cloud provider. In other embodiments, they belong to different cloud providers. In these embodiments, the datacenters can be in the same or in different regions. Still, in other embodiments, the datacenters can reside in a combination of private and public clouds.

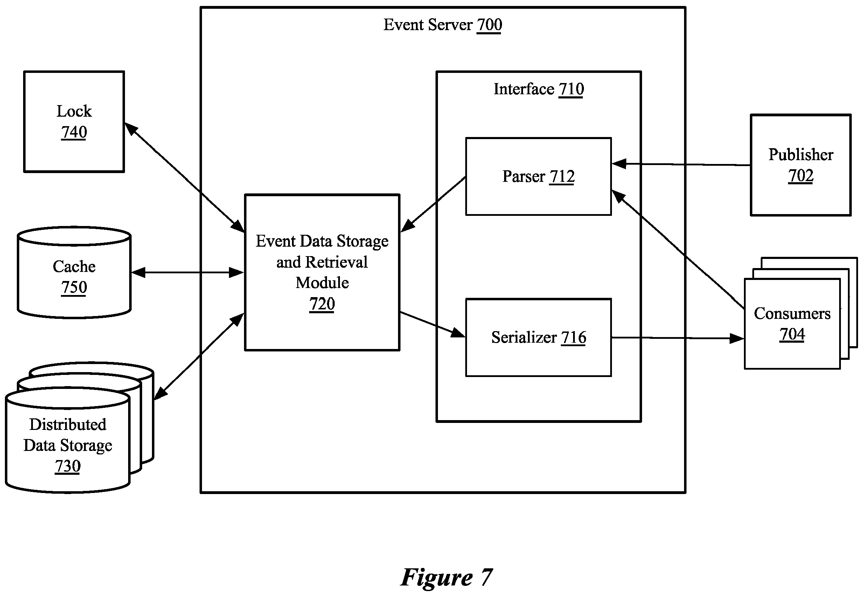

As discussed previously, an event server facilitates event registration for consumers with a distributed data storage such that each consumer does not have to provide information regarding where in the distributed data storage the event data is stored that they wish to receive and process. **Figure 7** illustrates an example event server 700 for performing such operations. In this example, the event server 700 includes an interface 710 and an event data storage and retrieval module 720. The interface 710 of the event server 700 sends and receives data messages with the publisher 702 and a set of one or more consumers 704. This interface may receive Application Programming Interface (API) calls from the publisher 702 to receive event data. These API calls are received at a parser 712 of the interface 710, which parses the calls to extract the event data and provide it to the event data storage and retrieval module 720 to store in the distributed data storage 730.

The parser 712 also receives API calls from the consumers 704 requesting event data from the event server 700. The parser 712 extracts information from the API calls to provide to the event data storage and retrieval module 720, which uses this information to retrieve event data from the distributed data storage 730. The module 720 also utilizes a lock 740 and a cache 750 to retrieve event data from the storage 730. After retrieving event data from the storage 730, the module 720 provides it to a serializer 716 of the interface 710 to send the event data back to the consumer 704 in an API call. In some embodiments, the interface 710 is a Hypertext Transfer Protocol (HTTP) Representational State Transfer (REST) interface, allowing the publisher 702 and consumers 704 to communicate with the event server 700 across networks and/or clouds. While the event server 700 is illustrated to include one interface 710 that interacts with the publisher 702 and the consumers 704, an event server of some embodiments includes a first interface to interact with a publisher and a second interface to interact with a set of consumers.

**Figure 8** conceptually illustrates a process 800 of some embodiments for registering for events with a distributed database that includes several data stores in several locations. This process 800 may be performed by an event server that facilitates event registration between the distributed database and a set of consumers, such as the event server 700 of **Figure 7****.**

The process 800 begins by receiving (at 805), from a publisher, multiple sets of event data, and storing the sets of event data in a distributed data storage. The event server in some embodiments stores in the distributed database multiple sets of event data it receives from one or more publishers. In such embodiments, the publisher does not have visibility into the topology of the distributed data storage, so the publisher interacts with the event server in order to store data in the data storage. In some embodiments, the event data is received in a set of one or more API calls at an interface of the event server. The interface may be an HTTP REST interface. The event server of some embodiments stores the event data into the distributed data storage according to policies (e.g., rules) that specify how to store the data. For example, when the distributed data storage is a Kafka database offered by Apache Kafka@, the event server stores the event data into topics, partitions, and offsets. Further information regarding this example database will be described below.

In some embodiments, a publish API received from the publisher includes one or more of an event type identifier, a source identifier, a resource identifier, a group identifier, an organization identifier, a software defined datacenter (SDDC) identifier, an operation, a version, and a timestamp. An event type identifier identifies the type of the resource change event. It conceptually matches the high level APIs exposed by the event publishing service (i.e., the publisher). A source identifier is used to identify the source (i.e., the publisher) causing this event. It is used for "trace-ability" purposes. A resource identifier identifies the resource associated with the event. Examples of resources include VMs, pods, containers, host computers, and clusters of such resources.

A group identifier ensures ordering per the event publish time. It specifies a resource identifier to keep the events for a single resource ordered, or an SDDC identifier to keep the order within all events in an SDDC. An organization identifier represents the organization taken from the object in the database. The operation specifies the type of operation associated with the event (e.g., "added," "removed," "updated," etc.). The version specifies the version of the model. The timestamp specifies the day and time at which the event occurred.

Next, the process 800 receives (at 810) a first data message that includes a consumer instance identifier identifying a particular consumer of events. More specifically, the consumer instance identifier identifies the particular instance of the particular consumer that sent the first data message. The consumer instance identifier is in some embodiments received from the particular instance in an API call at an interface of the event server. This interface may be the same interface that receives API calls from the publisher, or may be another interface of the event server. The particular instance provides the consumer instance identifier in order for the event server to know which consumer and which instance of that consumer is requesting event data.

In some embodiments, the event server also receives in the first data message (1) an event type identifier identifying a particular event type for which the particular instance is requesting event data, and (2) a consumer identifier identifying the particular consumer. The particular event type is related to event data for one or more network components for which the particular consumer needs to process. For example, the particular consumer may need information regarding updates to one or more host computers, so the particular instance can specify the type of event data it wishes to receive using the event type identifier. In some embodiments, one consumer includes only one consumer instance, so the consumer instance identifier still identifies that one instance, but no other consumer instance identifiers are related to the consumer identifier.

In some embodiments, consumer instance identifiers are UUIDs. In such embodiments, if the event server receives a consumer instance identifier from a first consumer instance that has already been assigned to a different, second consumer instance, the event server provides an error message to the first consumer so that the first consumer can generate a new UUID for the consumer instance.

At 815, the process 800 uses the consumer identifier to identify a set of one or more partitions in the data stores that the particular consumer is allowed to access. The event server can also use the event type identifier and the consumer identifier to identify the set of partitions. For instance, using the consumer identifier, consumer instance identifier, and event type identifier, the event server can identify which partition or partitions of the distributed database the particular consumer is assigned to, and which records within the partitions the particular consumer has not yet received and processed. Further information regarding the identification of the set of partitions will be described below.

Next, the process 800 retrieves (at 820) a first subset of event data from the identified set of partitions. In some embodiments, the event server identifies, in a cache, a first state for the particular consumer indicating that the particular consumer has not yet received a first subset of event data stored in the set of partitions. Because the particular consumer does not request the specific event data it wishes to process, the event server must determine which data to provide and determine that the particular consumer has not yet received it. In some embodiments, the event server looks to the cache that stores states for each consumer specifying which data the consumer has already successfully received and processed. Then, the event server can retrieve the first subset of event data from the set of partitions in order to provide it to the particular instance of the particular consumer.

After retrieving the first subset of event data, the process 800 provides (at 825) to the particular consumer the first subset of event data from the set of partitions for the particular consumer to process the first subset of event data. Then, the process 800 updates (at 830) the first state for the particular consumer into a second state indicating that the particular consumer has received the first subset of event data. Because the event server has to keep track of the data that the particular consumer receives and processes, it uses the cache to maintain this state.

Next, the process 800 receives (at 835) a second data message from the particular consumer to notify the event server that the particular consumer has processed the particular set of event data. In order for the event server to keep track of which event data the particular consumer has successfully processed (in order to prevent sending the same event data multiple times), the particular instance lets the event server know when it has successfully processed the event data it received such that itself and no other instances of the consumer need to receive the data in the future.

After receiving the second data message, the process 800 updates (at 840) the second state for the particular consumer into a third state indicating that the particular consumer has processed the first subset of event data and has not yet received a second subset of event data in the set of partitions. In order for the event server to know that the particular consumer has processed the first subset of event data and should receive another subset of event data upon a next request, the event server records in the cache the third state to indicate this. In some embodiments, if the event server has provided all of the event data stored in the set of partitions to the particular consumer (either provided to only the particular instance or provided in a distributed fashion to multiple instances), the event server updates the state for the particular consumer to indicate that the particular consumer is now allowed to access a different set of one or more partitions. After the cache has been updated to reflect that the particular consumer has successfully received and processed the first subset of event data, the process 800 ends.

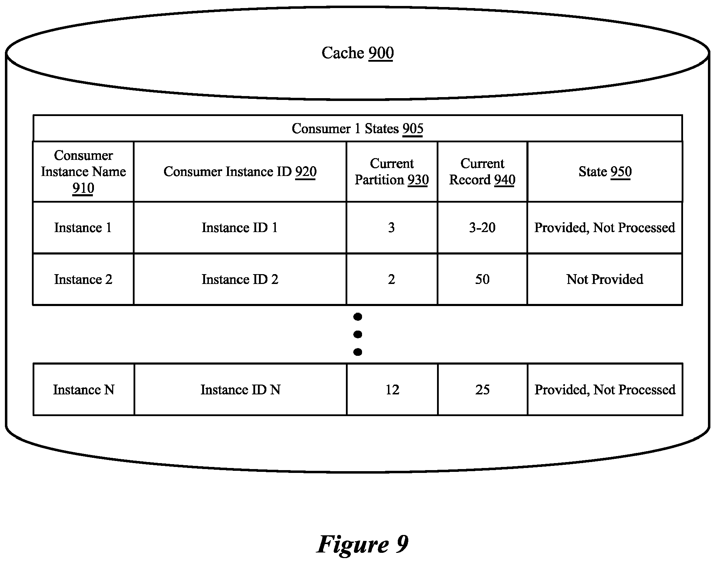

**Figure 9** illustrates an example cache 900 that an event server utilizes to provide event data to a set of consumers. In this example, the cache 900 includes a table 905 for a particular consumer to which an event server provides event data. The table 905 can include any number of rows for any number of instances of a consumer. The table 905 includes a consumer instance name column 910, a consumer instance identifier column 920, a current partition column 930, a current record column 940, and a current state column 950. This figure provides an example for a particular consumer that includes multiple instances, and each instance has its own state. In other embodiments, the cache 900 stores a state for each consumer as a whole.

The consumer instance name column 910 specifies the name of each consumer instance of the particular consumer. The consumer instance identifier column 920 specifies the identifier assigned to each instance. This identifier may be a UUID (e.g., df6fdea1-10c3-474c-ae62-e63def80de0b) or any other suitable identifier. In some embodiments, two consumer instances of different consumers can be assigned the same consumer instance identifier. This is because identifying a particular consumer instance includes identifying both the consumer and the consumer instance. Hence, even if two instances of different consumers have the same consumer instance identifier, the cache is organized such that they can be differentiated by looking to the consumer identifier.

The current partition column 930 specifies which partition each instance is assigned. In this example, the first instance is assigned the third partition, the second instance is assigned the second partition, and the Nth instance is assigned the twelfth partition. In some embodiments, each partition assigned to each instance of a particular consumer is part of the same event category (e.g., a tag or topic). In other embodiments, instances of one consumer are assigned different partitions of different event categories of the data storage. In such embodiments, the table 905 can also include a column specifying which event category (or event categories) is assigned to each instance.

The table 905 also includes a current record column 940 specifying which records within the current partition the instance has yet to receive or has received but not processed. For instance, the first instance's current partition specifies 3 and the current record specifies 3-20, meaning that the first instance has received and processed the first and second records in the third partition and is going to receive the event data in the third through 20^{th} records in the third partition. In order to know whether the first instance has already received this data without processing it, or the first instance has not yet received it, the event server can look to the state column 950, which specifies the current state for the instance. For the first instance in this table 905, the state 950 indicates that the event data stored in the current partition and records have been provided to the first instance but not yet processed by the first instance.

When an instance sends a message to the event server notifying it that the received event data has been processed, the event server can update the table 905 to reflect this. For example, the second instance's state specifies "not provided," meaning that the current partition and offset have not been provided to the second instance. After the second instance processed the previously received event data, the event server updated the second instance's current partition and/or offset to reflect the next event data the second instance is to receive, and updated the second instance's state to indicate that the new current state and offset have not been provided to the second instance.

While the current partition 930 and record 940 have been illustrated as part of the cache 900 in this figure, the event server may alternatively store this information in a local memory or storage of itself instead of the cache. In such embodiments, the cache only stores the state for each consumer or consumer instance.

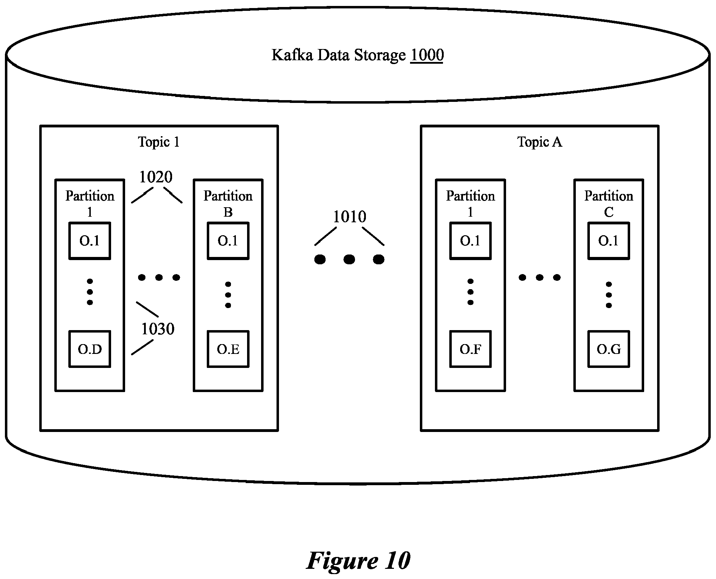

**Figure 10** illustrates an example Kafka data storage offered by Apache Kafka@. While this data storage 1000 stores and organizes data in a particular way, other data stores that store and organize data in other ways can be used along with an event server to provide data to consumers that have no little to no knowledge about the data storage. In this example, the data storage 1000 organizes data into one or more topics 1010, with each topic including one or more partitions 1020, and with each partition including one or more offsets 1030.

A Kafka topic is a category or feed name to which event data is stored in the storage 1000. Topics can have zero, one, or many consumers that subscribe to the data written in it. For each topic 1010, a set of partitions 1020 is maintained. A partition is an ordered, immutable sequence of records. In some embodiments, the records in the partitions are each assigned a sequential identification number referred to as an offset. Each partition 1020 can include any number of offsets 1030 (i.e., records of data). Because event data is stored in the Kafka data storage 1000 as such, an event server can track from which topic, partition, and offset each consumer or consumer instance has processed data, and know which records it needs to provide to each consumer in the future.

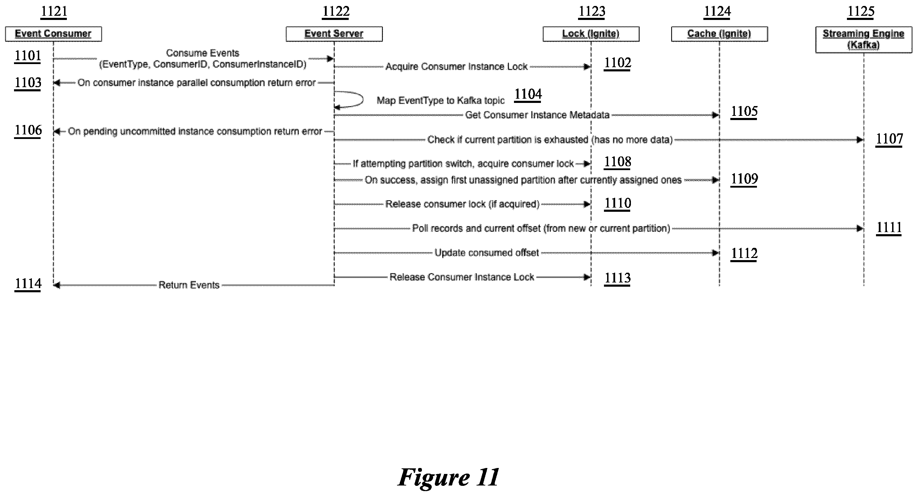

As discussed previously, an event server uses a consumer identifier, a consumer instance identifier, and an event type identifier to provide event data to a consumer. **Figure 11** illustrates the communication between an event consumer 1121, an event server 1122, a lock 1123, a cache 1124, and a streaming engine 1125 in order to provide event data to the consumer 1121. In this example, the event server utilizes a lock 1123 and a cache 1124 provided by Apache Ignite@, and a distributed data storage referred to as a streaming engine 1125 provided by Apache Kafka^{®}. Although this specific example uses a specific lock, cache, and data storage, the described embodiments of **Figure 11** can be performed for any suitable lock, cache, and data storage.

At 1101, the event consumer 1121 sends consume events to the event server 1122. A consume event is a data message sent by the event consumer requesting event data. In some embodiments, this data message includes an event type identifier identifying the type of event data the consumer is requesting, a consumer identifier identifying the consumer, and a consumer instance identifier identifying the particular consumer instance requesting event data.

At 1102, the event server 1122 acquires a consumer instance lock from the lock 1123. The purpose of this lock is to ensure there are no parallel requests from the same consumer instance of the event consumer 1121 that sent the consume event request at 1101. Because event consumption is stateful in some embodiments (i.e., the event server 1122 knows which consumer instance has received which event data from the streaming engine 1125), only one request is allowed per consumer instance identifier in order to only have one request per topic and partition at a time. This ensures that the event server does not provide the same event data multiple times to the same consumer instance, which could result in the consumer processing the same data multiple times. By acquiring a consumer instance identifier lock, the event server 1122 is also able to detect if the consumer instance identifier was incorrectly generated, i.e., incorrect client usage. While the lock 1123 used in this example is provided by Apache Ignite@, any distributed lock solution can be used.

If the consumer instance identifier is already in the process of a different event data request, the event server 1122, at 1103 returns an error message to the event consumer 1121. If the consumer instance identifier is not already in the process of a different event data request, at 1104, the event server 1122 maps the received event type identifier to one or more Kafka topics. A Kafka is an event category identifier used to organize the streaming engine 1125. In some embodiments, this mapping has a 1:1 ratio. In other embodiments, to accommodate high traffic, multiple topics can be mapped to one event type, and to accommodate low traffic, one topic can be mapped to multiple event types. Then, the event server 1122 gets consumer instance metadata from the cache 1124 at 1105. If there is already pending uncommitted instance consumption (i.e., the consumer instance has previously received event data and not notified that it was successfully processed), at 1106, the event server 1122 returns an error message to the event consumer 1121 to notify that the consumer instance already has uncommitted event data.

If the event server 1122 does not need to send a pending uncommitted instance consumption error message, the event server 1122 checks the state of the current event consumer 1121 using the cache 1124, and validates that the consume operation is allowed. In some embodiments, two subsequent consume events are not allowed because there is no guarantee all events are processed when they are committed. Then, at 1107, the event server 1122 looks to the streaming engine 1125 to check if the current partition assigned to the consumer instance of the consumer 1121 is exhausted, i.e., if all of the data stored in the current partition has been successfully processed by the consumer instance.

In some embodiments, the event server 1122 may, at 1108, attempt to perform a partition switch to change the consumer instance's current partition assignment to a new partition assignment if the current partition is exhausted. This may also be performed if the consumer instance has not yet been assigned a partition (e.g., if it is a new consumer or new consumer instance). In such embodiments, the event server 1122 acquires, at 1108, a consumer lock from the lock 1123. Partition assignments in some embodiments must be synchronized between all consumer instances of the consumer 1121 in order to avoid assigning the same partition to multiple consumer instance identifiers.

After the success of this lock, the event server 1122 assigns the first unassigned partition after the currently assigned partitions to the consumer instance at 1109. For example, if the first four partitions are assigned, and the fifth partition is unassigned, the event server 1122 assigns the fifth partition to the consumer instance identifier. After reassigning the partition, at 1110, the event server 1122 uses the lock 1123 to release the consumer lock acquired at 1108.

Then, at 1111, the event server 1122 polls the records and the current offset from the current (or new) partition of the streaming engine 1125, i.e., the event server 1122 retrieves event data from the partition of the streaming engine 1125. The event server 1122 then updates the consumed offset in the cache 1124 at 1112 to record that the consumer 1121 has been provided this event data (i.e., updates the cache state for the instance of the consumer 1121), and at 1113 releases the consumer instance lock using the lock 1123 acquired at 1102. Lastly, at 1114, the event server 1122 returns the retrieved event data to the event consumer 1121.

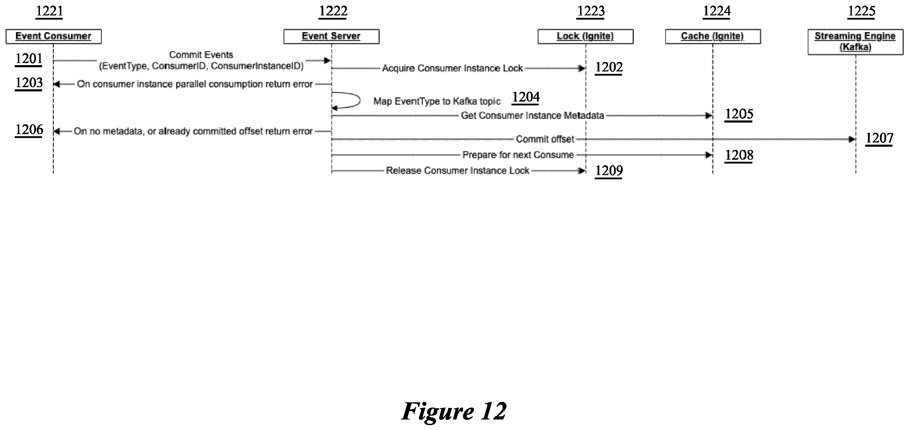

**Figure 12** illustrates the communication between an event consumer 1221, an event server 1222, a lock 1223, a cache 1224, and a streaming engine 1225 in order to record that the event consumer 1221 has successfully processed event data it received from the event server 1222. In this example, the event server utilizes a lock 1223 and a cache 1224 provided by Apache Ignite@, and a distributed data storage referred to as a streaming engine 1225 provided by Apache Kafka^{®}. Although this specific example uses a specific lock, cache, and data storage, the described embodiments of **Figure 12** can be performed for any suitable lock, cache, and data storage.

At 1201, the event consumer 1221 sends commit events to the event server 1222. A commit event is a data message sent by the consumer 1221 to notify the event server 1222 that it has successfully processed a set of event data. In some embodiments, this data message includes an event type identifier identifying the type of event data the consumer is requesting, a consumer identifier identifying the consumer, and a consumer instance identifier identifying the particular consumer instance requesting event data.

Next, at 1202, the event server 1222 acquires a consumer instance lock using the lock 1223. Because event consumption is stateful in some embodiments (i.e., the event server 1222 knows which consumer instance has received which event data from the streaming engine 1225), only one request is allowed per consumer instance identifier in order to only have one request per topic and partition at a time. By acquiring a consumer instance identifier lock, the event server 1222 is also able to detect if the consumer instance identifier was incorrectly generated, i.e., incorrect client usage. While the lock 1223 used in this example is provided by Apache Ignite@, any distributed lock solution can be used.

If the consumer instance identifier is already in the process of a different event data request, the event server 1222, at 1203 returns an error message to the event consumer 1221. If the consumer instance identifier is not already in the process of a different event data request, at 1204, the event server 1222 maps the received event type identifier to one or more Kafka topics. Then, the event server 1222 gets consumer instance metadata from the cache 1224 at 1205. If there is no metadata stored in the cache 1224 for the consumer instance, or if the consumer 1221 has already committed the event data, at 1206, the event server 1222 sends an error message to the consumer 1221. If no error message has to be sent, at 1207, the event server 1222 commits the partition and offset at the streaming engine 1225. Then, at 1208, the event server 1222 prepares for the next consume event (i.e., the next event data request) from the consumer instance by updating the cache state. In some embodiments, the event server 1222 updates the cache state by marking the consume operation as allowed, while keeping the assigned partition. Lastly, at 1209, the event server 1222 releases the consumer instance lock using the lock 1223 acquired at 1202.

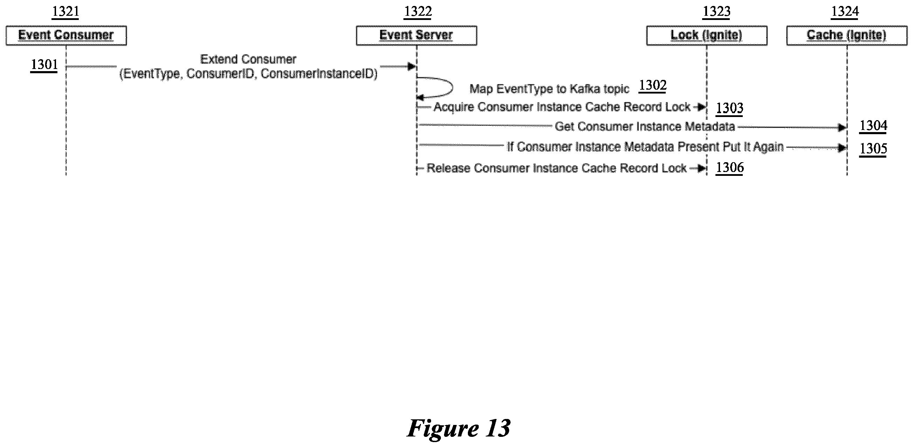

**Figure 13** illustrates the communication between an event consumer 1321, an event server 1322, a lock 1323, and a cache 1324 when the consumer 1321 takes a long time to process received event data. The cache 1324 in some embodiments does not maintain states indefinitely, and deletes them if the state has not been updated for a period of time. This may be configured for the cache 1324 so that the cache does not keep states for consumers or consumer instances that no longer receive event data or for consumers or consumer instances that are no longer operational. In such embodiments, the data stored in the cache 1324 for a consumer instance expires after a particular period of time where no updates to the data is made. For instance, if the cache is not updated in time to indicate that the consumer has processed a set of received event data, the cache can delete the consumer's state. In order to avoid this, the event consumer 1321 can send periodic heartbeat messages to the event server 1322 in order to extend the period of time for the consumer 1321 to process the event data. In this example, the event server utilizes a lock 1323 and a cache 1324 provided by Apache Ignite@. Although this specific example uses a specific lock and cache, the described embodiments of **Figure 13** can be performed for any suitable lock and cache. In some embodiments, heartbeat messages (also referred to as extend operation messages) can be sent by consumer instances continuously, regardless of whether the consumer instance is currently processing received event data or not. This ensures that the cache 1324 maintains the consumer instance's cache state as long as the consumer instance is operational.

At 1301, the consumer 1321 sends an extend consumer message to the event server 1322. This extend consumer message is the heartbeat message. In some embodiments, this data message includes an event type identifier identifying the type of event data the consumer is requesting, a consumer identifier identifying the consumer, and a consumer instance identifier identifying the particular consumer instance requesting event data. Next, at 1302, the event server 1322 maps the received event type identifier to one or more Kafka topics. Then, at 1303, the event server 1322 acquires a consumer instance lock from the lock 1323, and gets consumer instance metadata from the cache 1324 at 1304, i.e., the event server 1322 gets the consumer instance's cache state from the cache 1324.

After getting the cache state, at 1305, the event server 1322 puts the cache state into the cache 1324 again, which renews the cache's time to live (TTL). This means, that the cache 1324 restarts the time period to wait for an update from the event server 1322 before deleting the consumer instance's state. After renewing the time period for the consumer 1321, at 1306, the event server 1322 releases a consumer instance cache record lock using the lock 1323. In this process described in **Figure 13****,** a consumer instance lock is not used. This is because heartbeat messages should be able to run parallel with other requests from the consumer 1321. To deal with possible parallel updates to the cache 1324, the consumer instance cache record lock is used, which is for each cache record and synchronizes all write operations to the cache 1324. Once the consumer 1321 processes the event data, the consumer 1321 stops sending heartbeat messages.

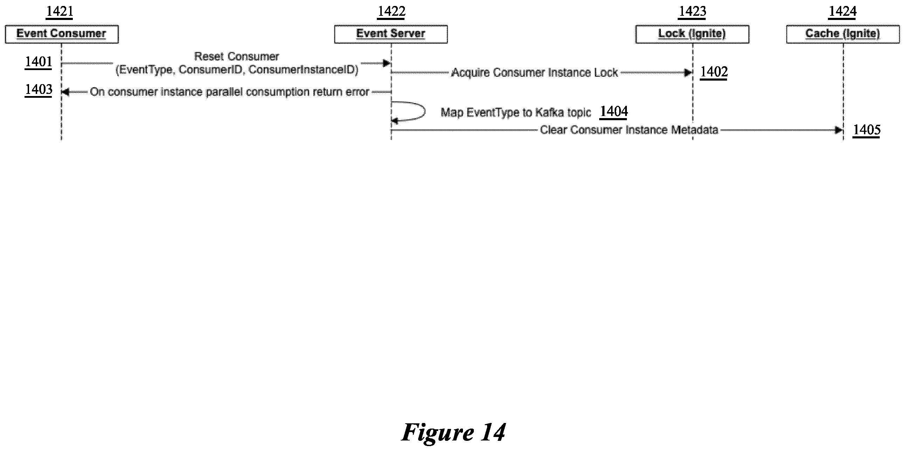

**Figure 14** illustrates the communication between an event consumer 1421, an event server 1422, a lock 1423, and a cache 1424 when the consumer 1421 fails to process a received set of event data. This may be due to a failure of the consumer 1421 or of the particular instance. When the consumer cannot execute a commit event (i.e., notify the event server 1422 that received event data has been successfully processed), the consumer 1421 sends a reset consumer message, which clears the cache for the consumer 1421. In this example, the event server utilizes a lock 1423 and a cache 1424 provided by Apache Ignite@. Although this specific example uses a specific lock and cache, the described embodiments of **Figure 14** can be performed for any suitable lock and cache.

At 1401, the consumer 1421 sends a reset consumer message for the event server 1422 to clear the cache state for the consumer 1421. In some embodiments, this data message includes an event type identifier identifying the type of event data the consumer is requesting, a consumer identifier identifying the consumer, and a consumer instance identifier identifying the particular consumer instance requesting event data.

At 1402, the event server 1422 acquires a consumer instance lock from the lock 1423. Because event consumption is stateful in some embodiments, only one request is allowed per consumer instance identifier in order to only have one request per topic and partition at a time. While the lock 1423 used in this example is provided by Apache Ignite@, any distributed lock solution can be used. If the consumer instance identifier is already in the process of a different event data request, the event server 1422, at 1403 returns an error message to the event consumer 1421. If the consumer instance identifier is not already in the process of a different event data request, at 1404, the event server 1422 maps the received event type identifier to one or more Kafka topics.

Then, at 1405, the event server 1422 clears the consumer instance metadata from the cache 1424, i.e., it clears the cache state. By clearing the cache state entirely, the event server 1422 makes it available for the next consume message from the consumer 1421 and unassigns the partition currently assigned to the consumer instance. By doing so, the next consume event received from the consumer 1421 is able to be performed in order to process the same set of event data that failed previously. In some embodiments, resetting the consumer's cache state is performed such that other partitions can be assigned to the instance of the consumer that failed to process the event data. The event data can be processed again by that instance of the consumer 1421, or by a different instance of the consumer 1421.

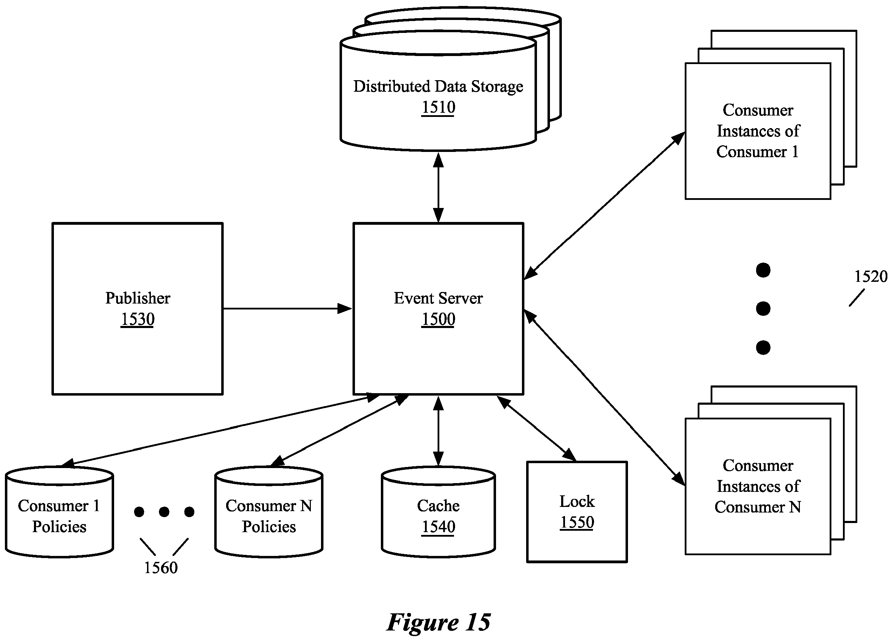

As discussed previously, an event server interacts with publishers and consumers to store and retrieve event data. **Figure 15** illustrates an example system for an event server 1500 to facilitate event registration between a distributed data storage 1510 and a set of consumers 1520 that require different policies (e.g., rules) for receiving event data. The event server 1500, distributed data storage 1510, publisher 1530, cache 1540, and lock 1550 perform similarly to the related components described for **Figure 1****.**

In this example, each consumer 1520 requires different sets of event-distribution policies 1560 for how they wish to receive event data from the event server 1500. For instance, a first consumer in some embodiments requires a replication policy that specifies that each consumer instance of the first consumer receives each event data tuple for which the first consumer registers for notification. Using this replication policy, the event server 1500 distributes all event data for the registered event to each instance of the first consumer. This ensures that each instance of the consumer receives and processes all of the event data.

In some embodiments, a second consumer requires a non-overlap policy specifying that no two consumer instances of the second consumer receives a same event data tuple for which the second consumer registers for notification. Using this non-overlap policy, the event server 1500 does not provide duplicates of any event data to any two instances of the second consumer. This ensures that no two instances receive and process any of the same event data tuples.

In some embodiments, a third consumer requires an overlap policy that allows two consumer instances of the third consumer to receive two different subsets of event data tuples that have overlapping event data tuples in common. Using an overlap policy, the event server 1500 provides some of the same event data tuples to at least two instances of the third consumer, but not all of the same event data tuples. This policy is used by a consumer in some embodiments when the consumer wishes for some data to be processed by multiple instances and other data to be processed by only one instance.

A fourth consumer in some embodiments requires a primary instance policy that specifies that a particular instance of the fourth consumer receives all of the event data tuples such that no other instances of the fourth consumer receive any event data tuples. In some embodiments, the particular instance is designated as a primary instance of the fourth consumer in the primary instance policy, while all other instances are secondary instances and are not specified in the policy. The primary instance receives and processes all event data for which the fourth consumer is registered. In the event of a failure of the primary instance, some embodiments provide an updated event distribution policy that specifies another instance of the fourth consumer as the primary instance that was previously a secondary instance. After receiving this updated policy, the event server 1500 sends all of the event data tuples to the new primary instance.

By using different sets of event-distribution policies 1560 for each consumer 1520, the event server 1500 can differently distribute event data to each of the consumers 1520 based on their preferences. An event server of some embodiments may store different sets of policies for providing event data based on the type of consumer. For example, the event server 1500 may provide event data to a load balancing service using a first set of policies, and provide event data to a firewall service using a second set of policies. In some embodiments, each set of policies 1560 is provided to the event server 1500 by a developer or an administrator of the consumer 1520. In other embodiments, a policy engine informs the event server 1500 on the sets of policies 1560. The policies 1560 may be stored in the cache 1540, as separate data storages, or in a local memory or storage of the event server 1500.

Many of the above-described features and applications are implemented as software processes that are specified as a set of instructions recorded on a computer readable storage medium (also referred to as computer readable medium). When these instructions are executed by one or more processing unit(s) (e.g., one or more processors, cores of processors, or other processing units), they cause the processing unit(s) to perform the actions indicated in the instructions. Examples of computer readable media include, but are not limited to, CD-ROMs, flash drives, RAM chips, hard drives, EPROMs, etc. The computer readable media does not include carrier waves and electronic signals passing wirelessly or over wired connections.

In this specification, the term "software" is meant to include firmware residing in read-only memory or applications stored in magnetic storage, which can be read into memory for processing by a processor. Also, in some embodiments, multiple software inventions can be implemented as sub-parts of a larger program while remaining distinct software inventions. In some embodiments, multiple software inventions can also be implemented as separate programs. Finally, any combination of separate programs that together implement a software invention described here is within the scope of the invention. In some embodiments, the software programs, when installed to operate on one or more electronic systems, define one or more specific machine implementations that execute and perform the operations of the software programs.

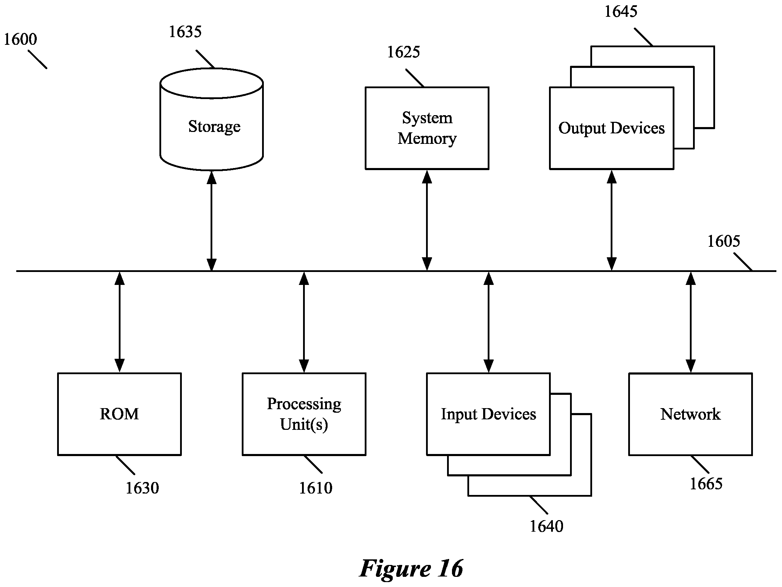

**Figure 16** conceptually illustrates a computer system 1600 with which some embodiments of the invention are implemented. The computer system 1600 can be used to implement any of the above-described computers and servers. As such, it can be used to execute any of the above described processes. This computer system includes various types of non-transitory machine readable media and interfaces for various other types of machine readable media. Computer system 1600 includes a bus 1605, processing unit(s) 1610, a system memory 1625, a read-only memory 1630, a permanent storage device 1635, input devices 1640, and output devices 1645.

The bus 1605 collectively represents all system, peripheral, and chipset buses that communicatively connect the numerous internal devices of the computer system 1600. For instance, the bus 1605 communicatively connects the processing unit(s) 1610 with the read-only memory 1630, the system memory 1625, and the permanent storage device 1635.

From these various memory units, the processing unit(s) 1610 retrieve instructions to execute and data to process in order to execute the processes of the invention. The processing unit(s) may be a single processor or a multi-core processor in different embodiments. The read-only-memory (ROM) 1630 stores static data and instructions that are needed by the processing unit(s) 1610 and other modules of the computer system. The permanent storage device 1635, on the other hand, is a read-and-write memory device. This device is a non-volatile memory unit that stores instructions and data even when the computer system 1600 is off. Some embodiments of the invention use a mass-storage device (such as a magnetic or optical disk and its corresponding disk drive) as the permanent storage device 1635.

Other embodiments use a removable storage device (such as a flash drive, etc.) as the permanent storage device. Like the permanent storage device 1635, the system memory 1625 is a read-and-write memory device. However, unlike storage device 1635, the system memory is a volatile read-and-write memory, such a random access memory. The system memory stores some of the instructions and data that the processor needs at runtime. In some embodiments, the invention's processes are stored in the system memory 1625, the permanent storage device 1635, and/or the read-only memory 1630. From these various memory units, the processing unit(s) 1610 retrieve instructions to execute and data to process in order to execute the processes of some embodiments.

The bus 1605 also connects to the input and output devices 1640 and 1645. The input devices enable the user to communicate information and select commands to the computer system. The input devices 1640 include alphanumeric keyboards and pointing devices (also called "cursor control devices"). The output devices 1645 display images generated by the computer system. The output devices include printers and display devices, such as cathode ray tubes (CRT) or liquid crystal displays (LCD). Some embodiments include devices such as a touchscreen that function as both input and output devices.

Finally, as shown in **Figure 16****,** bus 1605 also couples computer system 1600 to a network 1665 through a network adapter (not shown). In this manner, the computer can be a part of a network of computers (such as a local area network ("LAN"), a wide area network ("WAN"), or an Intranet, or a network of networks, such as the Internet. Any or all components of computer system 1600 may be used in conjunction with the invention.

Some embodiments include electronic components, such as microprocessors, storage and memory that store computer program instructions in a machine-readable or computer-readable medium (alternatively referred to as computer-readable storage media, machine-readable media, or machine-readable storage media). Some examples of such computer-readable media include RAM, ROM, read-only compact discs (CD-ROM), recordable compact discs (CD-R), rewritable compact discs (CD-RW), read-only digital versatile discs (e.g., DVD-ROM, dual-layer DVD-ROM), a variety of recordable/rewritable DVDs (e.g., DVD-RAM, DVD-RW, DVD+RW, etc.), flash memory (e.g., SD cards, mini-SD cards, micro-SD cards, etc.), magnetic and/or solid state hard drives, read-only and recordable Blu-Ray^{®} discs, ultra-density optical discs, and any other optical or magnetic media. The computer-readable media may store a computer program that is executable by at least one processing unit and includes sets of instructions for performing various operations. Examples of computer programs or computer code include machine code, such as is produced by a compiler, and files including higher-level code that are executed by a computer, an electronic component, or a microprocessor using an interpreter.

While the above discussion primarily refers to microprocessor or multi-core processors that execute software, some embodiments are performed by one or more integrated circuits, such as application specific integrated circuits (ASICs) or field programmable gate arrays (FPGAs). In some embodiments, such integrated circuits execute instructions that are stored on the circuit itself.

As used in this specification, the terms "computer", "server", "processor", and "memory" all refer to electronic or other technological devices. These terms exclude people or groups of people. For the purposes of the specification, the terms display or displaying means displaying on an electronic device. As used in this specification, the terms "computer readable medium," "computer readable media," and "machine readable medium" are entirely restricted to tangible, physical objects that store information in a form that is readable by a computer. These terms exclude any wireless signals, wired download signals, and any other ephemeral or transitory signals.

While the invention has been described with reference to numerous specific details, one of ordinary skill in the art will recognize that the invention can be embodied in other specific forms without departing from the spirit of the invention. In addition, a number of the figures (including **Figures 8** and **11****-14**) conceptually illustrate processes. The specific operations of these processes may not be performed in the exact order shown and described. The specific operations may not be performed in one continuous series of operations, and different specific operations may be performed in different embodiments. Furthermore, the process could be implemented using several sub-processes, or as part of a larger macro process. Thus, one of ordinary skill in the art would understand that the invention is not to be limited by the foregoing illustrative details, but rather is to be defined by the appended claims.

## Claims

1. A method for providing data regarding events that is stored in a data store to a set of consumers, the method comprising:
at an event server:
providing, to a first instance of a particular consumer that comprises a plurality of instances, a stream of data regarding a first event that is stored in a set of one or more partitions of the data store assigned to the first instance;
receiving, from the first instance, notification that the first instance failed to process the stream of data;
unassigning the set of partitions to the first instance;
assigning the set of partitions to a second instance of the particular consumer; and
providing, to the second instance, the stream of data regarding the first event.

2. The method of claim 1, further comprising:
before providing to the first instance the stream of data regarding the first event:
receiving, from the first instance, a registration to receive data for the first event;
using an identifier of the first instance to identify the set of partitions of the data store assigned to the first instance; and
retrieving the stream of data from the set of partitions.

3. The method of claim 2, wherein:
the event server maintains a cache comprising mappings between each of the plurality of instances of the particular consumer and different sets of one or more partitions of the data store, and
unassigning the set of partitions to the first instance comprises updating a first entry stored in the cache mapping the first instance to the set of partitions into a second entry that does not map the first instance to any partitions in the data store.

4. The method of claim 3, wherein
the stream if data is a first stream of data and the set of partitions is a first set of partitions, and assigning the set of partitions to the second instance comprises:
after unassigning the first set of partitions to the first instance:
receiving, from the second instance, notification that the second instance has processed a second stream of data regarding the first event that is stored in a second set of one or more partitions of the data store; and
updating a third entry stored in the cache mapping the second instance to the second set of partitions into a fourth entry mapping the second instance to the first set of partitions.

5. The method of any one of the claims 1 to 4, further comprising:
receiving, from the second instance, notification that the second instance failed to process the stream of data; and
resending the stream of data to the second instance.

6. The method of claim 5, further comprising:
after receiving the notification that the second instance failed to process the stream of data and before resending the stream of data to the second instance:
unassigning the set of partitions to the second instance;
receiving, from the second instance, a registration to receive data for the first event; and
reassigning the set of partitions to the second instance.

7. The method of any one of the claims 1 to 6, wherein
the set of partitions is a first set of partitions and the stream of data is a first stream of data, the method further comprising:
after unassigning the first set of partitions to the first instance:
receiving, from the first instance, a registration to receive data for the first event;
assigning a second set of partitions to the first instance that stores data regarding the first event; and
providing a second stream of data regarding the first event to the first instance.

8. The method of any one of the claims 1 to 7, wherein
providing, to the second instance, the stream of data regarding the first event comprises iteratively providing data tuples that are stored continuously in the set of partitions regarding the first event.

9. The method of any one of the claims 1 to 8, wherein
the data storage is a distributed data storage.

10. The method of claim 9, wherein
the distributed data storage is a distributed database.

11. The method of any one of the claims 1 to 10, wherein
at least two partitions of the data store are in two different geographic sites.

12. The method of any one of the claims 1 to 11, wherein
the particular consumer resides in a first datacenter and the data store resides in a second datacenter;
wherein in particular
the first and second datacenters belong to a same cloud provider;
or
the first and second datacenters belong to different cloud providers.

13. The method of any one of the claims 1 to 12, wherein
the first instance resides in a first datacenter and the second instance resides in a second datacenter.

14. The method of any one of the claims 1 to 13, wherein
the set of consumers has no knowledge of how the event server stores the data in the data store.

15. A non-transitory machine readable medium storing a program for execution by at least one processing unit for providing data regarding events that is stored in a data store to a set of consumers, the program comprising sets of instructions for:
at the event server:
providing, to a first instance of a particular consumer that comprises a plurality of instances, a stream of data regarding a first event that is stored in a set of one or more partitions of the data store assigned to the first instance;
receiving, from the first instance, notification that the first instance failed to process the stream of data;
unassigning the set of partitions to the first instance;
assigning the set of partitions to a second instance of the particular consumer; and
providing, to the second instance, the stream of data regarding the first event.
wherein in particular
the program further comprises sets of instructions for:
before providing to the first instance the stream of data regarding the first event:
receiving, from the first instance, a registration to receive data for the first event;
using an identifier of the first instance to identify the set of partitions of the data store assigned to the first instance; and
retrieving the stream of data from the set of partitions;
wherein further in particular
the event server maintains a cache comprising mappings between each of the plurality of instances of the particular consumer and different sets of one or more partitions of the data store, and
the set of instructions for unassigning the set of partitions to the first instance comprises a set of instructions for updating a first entry stored in the cache mapping the first instance to the set of partitions into a second entry that does not map the first instance to any partitions in the data store;
wherein still further in particular
the stream if data is a first stream of data and the set of partitions is a first set of partitions, and the set of instructions for assigning the set of partitions to the second instance comprises sets of instructions for:
after unassigning the first set of partitions to the first instance:
receiving, from the second instance, notification that the second instance has processed a second stream of data regarding the first event that is stored in a second set of one or more partitions of the data store; and
updating a third entry stored in the cache mapping the second instance to the second set of partitions into a fourth entry mapping the second instance to the first set of partitions.
